# FASCICULE DE BREVET EUROPEEN

(11) **EP 0 774 701 B1**
(45) Date de publication et mention de la délivrance du brevet: **12.03.2003**
(21) Numéro de dépôt: 95810724.5
(22) Date de dépôt: 17.11.1995
(51) Int. Cl.: G05B 19/416

(54) **Procédé et programme de commande numérique de machine-outil ainsi que commande numérique fonctionnant au moyen de ce programme**
Verfahren und Programm einer numerischen Steuerung einer Werkzeugmaschine und numerische Steuerung, die mit Mitteln dieses Programms arbeitet
Process and program for a numerical control of a machine tool and a numerical control which works with means of this program

(43) Date de publication de la demande: 21.05.1997
(73) Titulaire: Tornos SA, 2740 Moutier (CH)
(72) Inventeur: Roth, Pierre, 2736 Sorvilier (CH); Paroz, Cedric, 2732 Saicourt (CH)
(74) Mandataire: BOVARD AG - Patentanwälte

(56) Documents cités:
- EP-A- 0 474 603
- US-A- 5 392 207

## Description

La présente invention concerne un procédé et un logiciel de génération d'ordres de déplacement pour une machine-outil. De manière générale, la présente invention concerne le problème de la commande numérique de machines-outils.

### Art antérieur

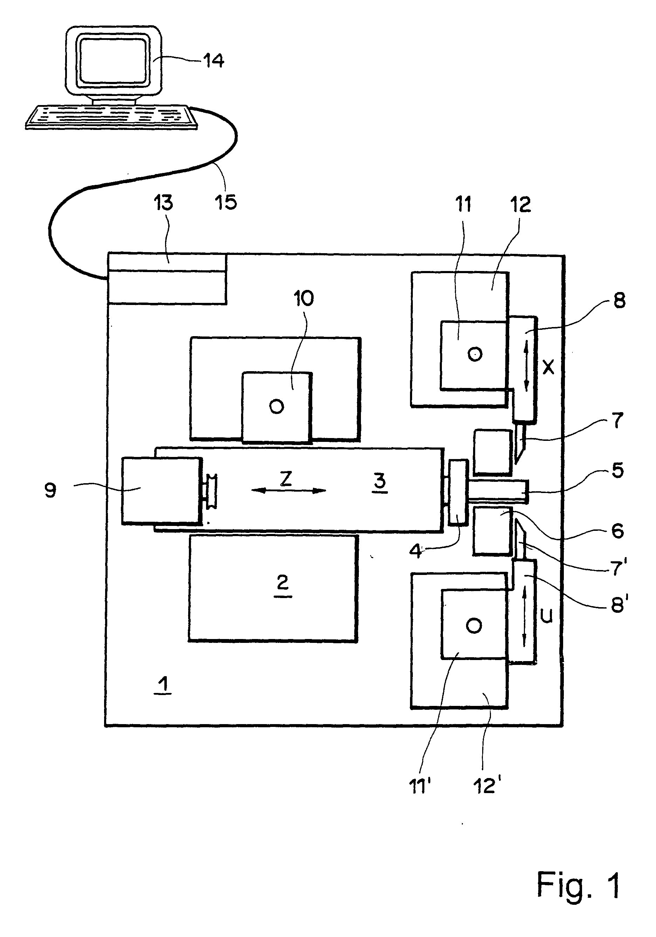

La figure 1 illustre un exemple de machine-outil à commande numérique. Sur une plaque de base 1, un bâti 2 supporte une poupée 3 dont la broche est équipée d'une pince de serrage 4. Une barre à usiner 5 s'étend à l'avant de la poupée 3 et traverse un canon 6 de sorte que son extrémité se trouve en regard d'un premier outil de tournage 7, solidaire d'un premier coulisseau 8, et d'un deuxième outil de tournage 7' solidaire d'un deuxième coulisseau 8'. Un moteur de broche 9 fait tourner la pince 4. Un moteur de poupée 10 assure les déplacements vers l'avant et vers l'arrière de la poupée 3. Les commandes d'ouverture et de fermeture de la pince 4 ne sont pas représentées. Un moteur 11 déplace le premier coulisseau 8 sur une glissière 12, de manière à commander la position de l'outil 7 dans le sens radial par rapport à l'axe de rotation de la barre 5; de manière similaire, un moteur 11' déplace le deuxième 8' sur une autre glissière 12', de manière à commander la position du deuxième outil 7' dans le sens radial. Les pièces successives sont usinées en commandant les moteurs 10, 11 et 11' de manière à contrôler les déplacements des axes z, x et u. Dans certains cas, le moteur d'entraînement de la broche 9 peut également être commandé indépendamment.

Par la suite, on désignera les axes et les broches de la machine-outii par le terme général de ressources. Une ressource peut également être une combinaison mathématique virtuelle d'axes et de broches, comme on le verra plus loin.

Les différents moteurs sont contrôlés par le dispositif de commande numérique 13 à partir d'un programme généré sur un ordinateur externe 14 et transmis au dispositif de commande 13 par une ligne sérielle 15. Le programme de commande peut naturellement aussi être transmis autrement au dispositif 13, par exemple sur une disquette.

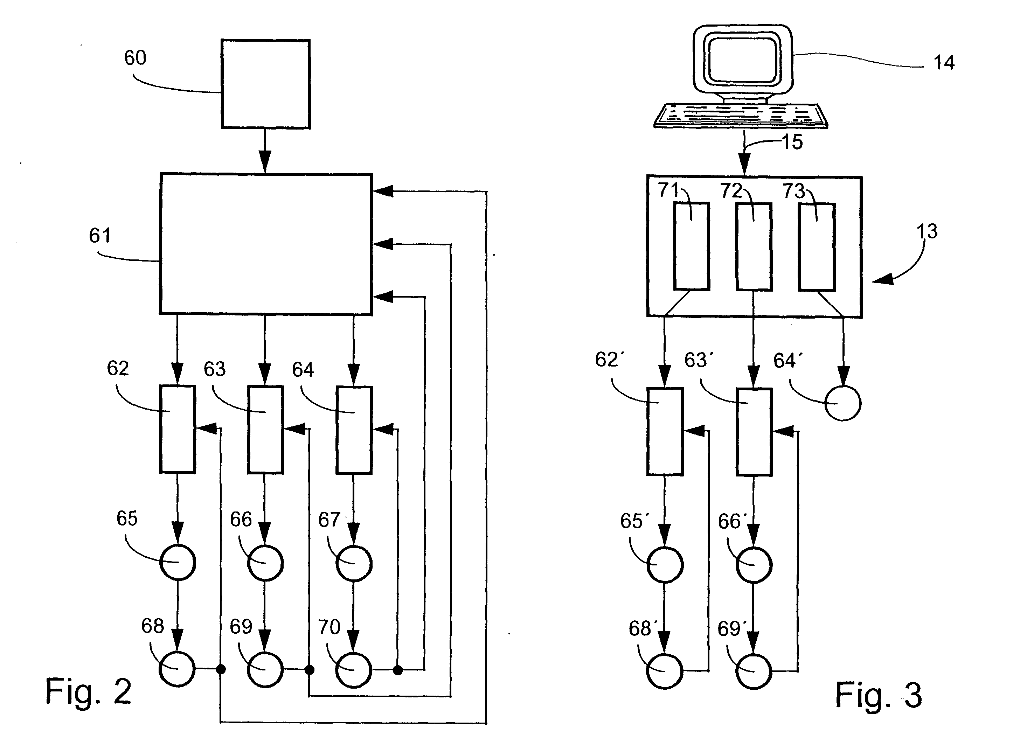

La figure 2 illustre le principe d'une commande numérique CNC traditionnelle dans le cas particulier d'une machine à trois axes.

Un interpolateur 61 reçoit des instructions 60 générées sur un ordinateur externe. L'interpolateur utilise ces consignes pour commander des déplacements des moteurs 65, 66, 67 correspondant à chaque ressource au travers des régulateurs 62, 63, 64. Des capteurs 68, 69, 70 mesurent en permanence la position ou la vitesse de chaque ressource; ces informations sont utilisées comme contre-réaction par les régulateurs correspondants. Les régulateurs 62, 63, 64 permettent d'assurer que les moteurs correspondants 65, 66, 67 suivent la consigne imposée par l'interpolateur 61 même en cas de perturbations.

Les instructions 60 sont idéalistes; par exemple, il peut y avoir des instructions de déplacements ou d'accélérations instantanés nécessitant une puissance infinie. L'interpolateur fournit par conséquent des consignes idéalistes aux régulateurs 62, 63, 64 et attend que les moteurs correspondants aient atteint la position demandée avant de commander le déplacement suivant. L'interpolateur utilise pour cela un feed-back fourni par les capteurs 68, 69, 70. Si des mouvements sont interpolés entre plusieurs ressources, l'interpolateur 61 attend que tous les moteurs concernés aient atteint la position demandée.

La fonction de l'interpolateur 61 est donc double: d'une part, il permet d'adapter les consignes de déplacement aux capacités physiques des moteurs 68, 69, 70, en fournissant de nouvelles consignes seulement lorsque les consignes précédentes ont été exécutées. D'autre part, il permet de réaliser des trajectoires multidimensionnelles impliquant des déplacements de plusieurs ressources, par exemple des déplacements rectilignes, circulaires ou paraboliques.

Les calculs complexes nécessaires à ces interpolations, qui sont effectuées en temps réel, exigent cependant une puissance de calcul importante qui renchérit considérablement les commandes numériques classiques. Par conséquent, les ressources susceptibles d'être utilisées ensemble dans une interpolation sont habituellement associées conceptuellement en plusieurs canaux. Une machine à 6 axes peut par exemple comporter 2 canaux formés chacun de trois axes.

Cette notion de canal limite considérablement les possibilités d'utilisation de la machine-outil, car une ressource appartenant à un canal ne peut pas être interpolée avec la ressource d'un autre canal. Il n'est par conséquent pas possible de tirer pleinement parti des fonctionnalités et de la rapidité de la machine-outil.

On peut dire que les machines-outils à commande numérique traditionnelles de la figure 2 fonctionnent en boucle fermée. En effet, l'interpolateur 61 calcule en temps réel les consignes appliquées aux régulateurs 62, 63, 64 en fonction des signaux fournis par les capteurs 68, 69, 70.

La plupart des interpolateurs 61 de l'art antérieur reconnaissent des instructions 60 dans une des nombreuses variantes du langage ISO. Ce langage comprend des instructions de haut niveau, impliquant de multiples déplacements, ainsi que des opérateurs de boucle ("for") ou de conditions ("if"). Il est possible de définir au moyen de ce langage une grande variété d'opérations à effectuer sur la pièce.

Le document de brevet EP474603 au nom de la déposante décrit une commande numérique fonctionnant selon un autre principe illustré par la figure 3. A chaque ressource de la machine correspond une table de pas 71, 72, 73 qui mémorise une suite d'ordres de déplacements pour cet axe. Ces déplacements sont imposés une fois pour toutes. Un compteur, non représenté, provoque à intervalles déterminés la lecture dans chaque table de pas des incréments de déplacement de l'axe correspondant. Ces déplacements sont soit directement exécutés par des moteurs pas-à-pas 64', soit utilisés comme valeur de consigne par des régulateurs 62', 63' commandant des moteurs 65', 66' en utilisant des informations fournies par des capteurs 68', 60'. Il n'y a aucun feed-back entre les capteurs mesurant la pièce usinée et la commande numérique 13. On dit donc que le système fonctionne en boucle ouverte, la rétroaction depuis les capteurs 68', 69' ne s'appliquant qu'aux régulateurs associés 62', 63', mais n'influençant pas la séquence d'ordres de déplacements imposés.

Il y a une analogie entre le principe de cette commande et les machines traditionnelles, par exemple les décolleteuses, utilisant des cames. Dans ces machines, chaque outil est entraîné par une came. La trajectoire de chaque outil est donc provoquée par le déroulement du profil des cames; la position angulaire des cames détermine la position des outils. La synchronisation du mouvement des outils est assurée en montant toutes les cames sur un arbre à cames commun.

Pour chaque nouveau type de pièces à usiner, un nouveau jeu de cames doit être fabriqué. Le profil des cames doit ensuite être amélioré en les testant sur la machine et en modifiant leur profil tant que la pièce usinée ne correspond pas exactement à ce qui est désiré. La machine-outil reste donc généralement inemployée en production lorsqu'un nouveau programme de pièce est mis au point.

De manière correspondante, dans les machines à commande numérique décrites dans le brevet mentionné, la trajectoire de chaque outil est déterminée par le contenu des tables de pas correspondantes. Un nouveau jeu de tables de pas doit être créé au préalable pour chaque nouveau type de pièces à usiner. Comme tous les calculs d'interpolations sont calculés séparément et une seule fois sur un ordinateur 14 externe, la vitesse de calcul n'est pas critique; le calcul peut donc être complexe sans que la machine-outil soit ralentie.

L'usinage d'une pièce complexe pouvant impliquer des milliers de déplacements d'axes coordonnés, il n'est la plupart du temps pas possible de développer manuellement les tables de pas. Comme indiqué à la fin de la page 4 du brevet susmentionné, on crée donc préalablement ces tables au moyen d'un logiciel de calcul fonctionnant sur un ordinateur 14 externe à la machine.

La présente invention concerne notamment le problème de la génération des tables de pas 71, 72, 73 sur l'ordinateur externe 14. L'invention peut cependant aussi s'appliquer à la génération des instructions 60 pour un interpolateur dans une commande numérique traditionnelle selon la figure 2, ou à la génération d'ordres de déplacements dans une commande numérique quelconque.

On connaît dans l'art antérieur des systèmes permettant à l'opérateur d'introduire dans son logiciel de calcul le profil initial de la pièce ainsi que le profil désiré. Un logiciel calcule alors automatiquement les ordres de déplacement des axes de manière à obtenir ce profil en un minimum d'opérations.

Ce type de logiciel est extrêmement compliqué à développer et offre généralement une souplesse limitée. Il peut parfois être difficile et lent d'introduire ou de définir exactement toutes les dimensions de la pièce désirée, en particulier si celle-ci a un profil compliqué. L'opérateur n'a en outre généralement aucune possibilité de modifier le plan d'opérations calculé si celui-ci ne lui donne pas entièrement satisfaction.

Pour toutes ces raisons, il est plus naturel d'introduire le profil de la pièce initiale, qui est de forme généralement simple, ainsi que les opérations d'usinage principales devant être effectuées sur cette pièce. L'opérateur contrôle lui-même les opérations d'usinage effectuées.

On pourrait utiliser à cet effet le langage ISO utilisé avec les commandes numériques traditionnelles selon la figure 1. Il est possible de définir au moyen de ce langage les opérations à effectuer sur la pièce, et de les convertir au moyen d'un compilateur en une succession d'instructions de déplacement des différents axes, regroupées dans les tables de pas.

Malheureusement, comme on l'a vu, les possibilités de description de ce langage sont insuffisantes pour commander avec la souplesse voulue des opérations d'usinage complexes. En particulier, le regroupement arbitraire des axes en canaux prédéfinis constitue une limitation qui empêche de tirer pleinement parti des possibilités de la machine. Il est en outre difficile avec ce langage d'introduire des synchronisations entre des déplacements d'axes appartenant à des canaux différents, et donc de définir avec la souplesse désirée des opérations d'usinage multitâches, c'est-à-dire faisant intervenir des déplacements simultanés de plusieurs systèmes d'outils.

Bien que de nombreuses extensions du langage ISO aient été proposées avec le développement de nouvelles commandes numériques, il est généralement difficile de synchroniser des opérations autrement qu'en ajoutant un nombre de phases d'attente suffisant après les opérations les plus rapides. Les machines-outils sont donc contraintes à fonctionner à une vitesse en dessous de leurs possibilités théoriques en raison de la faiblesse des possibilités de description du langage ISO. Ce problème est particulièrement crucial avec des machines-outils modernes comprenant plusieurs systèmes d'outils devant fonctionner en parallèle.

Le langage ISO est en outre devenu très compliqué à utiliser en raison de ces nouvelles instructions. L'opérateur qui généralement ne connaît pas la totalité du jeu d'instructions d'une nouvelle commande numérique renonce par conséquent bien souvent à des possibilités de programmation théoriquement disponibles.

L'utilisation du langage ISO ne permet donc que de générer des tables de pas insatisfaisantes, qu'il est nécessaire de tester directement sur la machine-outil pour vérifier si les tables générées comportent des phases d'attente inadmissibles. Dans ce cas, il est alors nécessaire de reprendre et d'améliorer les tables de pas, ce qui implique donc de nombreux essais successifs provoquant l'immobilisation de la machine.

### Buts

Un but de la présente invention est donc de proposer un procédé et un logiciel de génération d'ordres de déplacement pour commande numérique de machine-outil évitant les inconvénients des dispositifs de l'art antérieur.

Un autre but de la présente invention est de proposer un procédé et un logiciel pouvant générer soit des ordres de déplacement, sous formes d'instructions, utilisables par des commandes numériques du type décrit en relation avec la figure 2, soit des ordres de déplacement implémentés sous formes de tables de pas utilisables par des commandes numériques du type décrit en relation avec la figure 3.

Un autre but est de proposer un procédé et un logiciel de génération d'ordres de déplacement adapté à n'importe quel type de machine-outil.

Un autre but de la présente invention est de proposer un procédé et un logiciel de génération d'ordres de déplacement pour une machine-outil facile à utiliser par l'opérateur. En particulier, un but de la présente invention est de proposer un procédé et un logiciel nécessitant le moins possible de connaissances spécialisées de la part de l'opérateur, et offrant un confort d'utilisation moderne.

Un autre but est de proposer un procédé et un logiciel de génération d'ordres de déplacement permettant aux machines-outils à commande numérique de fonctionner de manière beaucoup plus efficace qu'avec des ordres de déplacement générés à partir de logiciels utilisant des langages de description insuffisants tels que le langage ISO.

Un autre but est de proposer un procédé et un logiciel de génération d'ordres de déplacement permettant d'utiliser le plus efficacement possible les possibilités de la machine-outil à laquelle ces ordres sont destinés. En particulier, un but de la présente invention est d'éviter les limitations dues au regroupement arbitraire des ressources de la machine-outil en canaux prédéfinis.

Un autre but est de donner à l'opérateur un procédé et un logiciel de génération d'ordres de déplacement permettant de décrire et de générer des successions complexes d'opérations d'usinage synchronisées entre elles. En particulier, un but est de permettre à l'opérateur de définir lui-même les synchronisations de déplacements de ressources appartenant à différents systèmes d'axes sur la machine, de manière à utiliser pleinement les possibilités de travail multitâche de la machine-outil.

Un autre but de la présente invention est de proposer un procédé et un logiciel de génération d'ordres de déplacement pour une machine-outil qui laisse à l'opérateur la responsabilité de déterminer lui-même le plan d'opérations.

Un autre but est de proposer un procédé et un logiciel de génération d'ordres de déplacement permettant de minimiser le nombre de tests nécessaires sur la machine.

Un autre but est de proposer un procédé et un logiciel de génération d'ordres de déplacements comprenant des moyens de simulation du processus d'usinage.

Ces buts sont atteints selon l'invention au moyen des éléments de la revendication 1.

Plus particulièrement, ces buts sont atteints par un procédé de génération d'ordres de déplacements pour une machine-outil dont les axes sont regroupés en une pluralité de systèmes d'axes, le procédé comprenant successivement:
une étape permettant à l'opérateur d'introduire dans chaque système d'axes un plan d'opérations constitué par une succession d'opérations consécutives, chaque opération étant choisie parmi un catalogue d'opérations,
une étape permettant à l'opérateur d'imposer des règles de synchronisation entre opérations effectuées dans des systèmes d'axes différents,
l'ensemble du plan d'opérations et des règles de synchronisation constituant la gamme opératoire,
et une étape de calcul des ordres de déplacement à partir de la gamme opératoire.

Dans une réalisation préférentielle, lesdits ordres de déplacement sont implémentés sous forme de tables de pas.

Dans une réalisation préférentielle, les ressources peuvent être librement regroupées en systèmes d'axes définissables par l'opérateur.

Dans une réalisation préférentielle, le procédé comprend en outre une étape de paramétrage des différentes opérations, permettant à l'opérateur de paramétrer les différentes opérations.

L'invention sera mieux comprise à l'aide de la description et des figures annexées, parmi lesquelles:
- la figure 1 représente à titre d'exemple une vue de dessus d'une machine-outil de l'art antérieur pouvant fonctionner au moyen du procédé de la présente invention,
- la figure 2 illustre le principe de fonctionnement d'une commande numérique CNC traditionnelle,
- la figure 3 illustre le principe de fonctionnement d'une commande numérique utilisant des tables de pas,
- la figure 4 est un graphique illustrant un principe connu de l'élaboration d'une table de pas,
- la figure 5 montre schématiquement les données contenues dans une table de pas,
- la figure 6 est un organigramme du procédé et du logiciel selon la présente invention,
- la figure 7 est une vue d'écran d'une fenêtre d'édition d'outil dans un logiciel utilisé pour mettre en oeuvre le procédé de la présente invention,
- la figure 8 est une vue d'écran d'une fenêtre principale dans un logiciel utilisé pour mettre en oeuvre le procédé de la présente invention,
- la figure 9 illustre le principe de définition des synchronisations dans un logiciel utilisé pour mettre en oeuvre le procédé de la présente invention,
- la figure 10 est une vue d'écran d'une fenêtre de paramétrage des opérations dans un logiciel utilisé pour mettre en oeuvre le procédé de la présente invention, et
- la figure 11 est une vue d'écran d'une fenêtre de paramétrage des opérations dans un logiciel utilisé pour mettre en oeuvre le procédé de la présente invention.

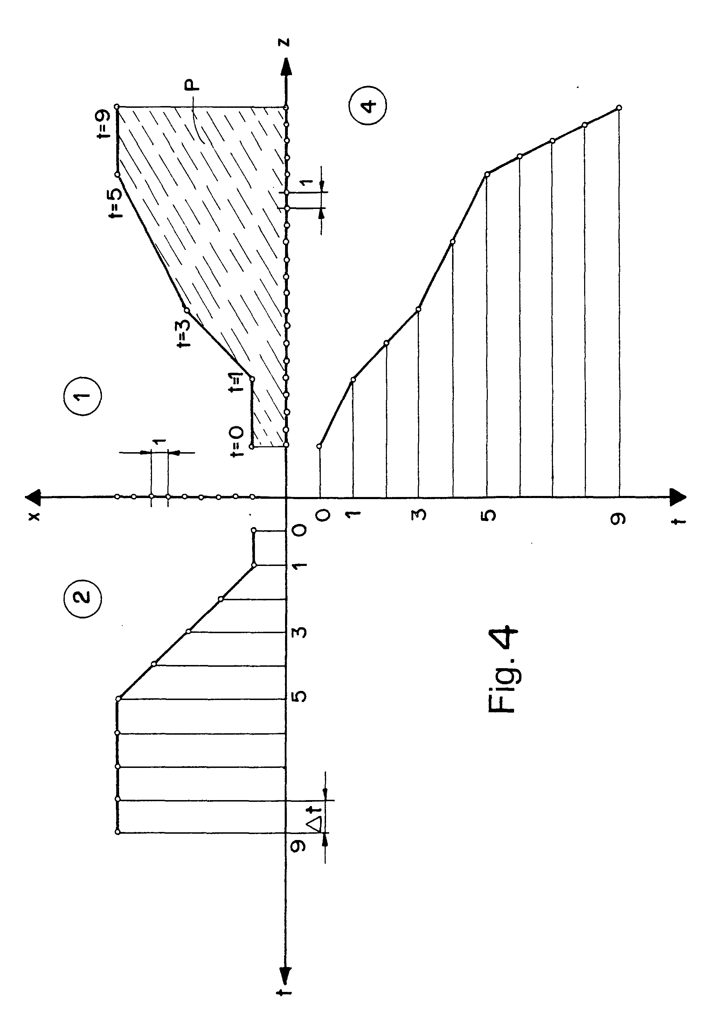

Le graphique de la figure 4 illustre le principe de création manuel de tables de pas, correspondants aux axes z et x, et susceptibles d'être utilisées dans le dispositif de commande numérique 13 (figure 1). Le profil P d'une pièce que l'on désire usiner est représenté schématiquement dans le quadrant 1 en haut à droite du graphique. Dans ce graphique, les axes indiqués par la référence t sont des axes temporels, quantifiés avec un pas de quantification fixe Δt valant par exemple 8 millisecondes. Les axes z et x sont gradués avec un pas correspondant à l'incrément des moteurs 9, respectivement 11.

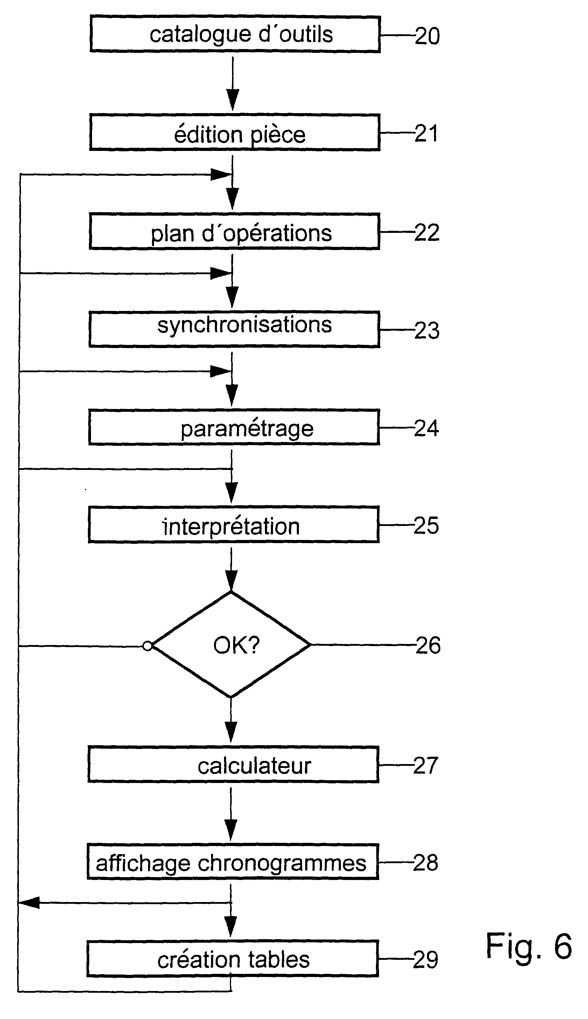

Dans cet exemple, le profil P désiré est obtenu uniquement par déplacement des axes x et z, l'axe u restant immobile. L'opérateur indique tout d'abord le long du profil le temps nécessaire pour obtenir chaque section en fonction de la machine utilisée. A la fin de chaque intervalle de temps Δt, on reporte dans le quadrant 4 le déplacement Δz que doit avoir effectué la barre 5, et dans le quadrant 2 le déplacement Δx que doit avoir effectué l'outil 7 pour obtenir le profil souhaité. Sur la figure 6, on voit ainsi qu'à la fin du premier intervalle Δt le déplacement de la poupée doit être de 4 pas et celui de l'outil de 0 pas. La somme des intervalles de temps est la même pour l'axe z que pour l'axe y.

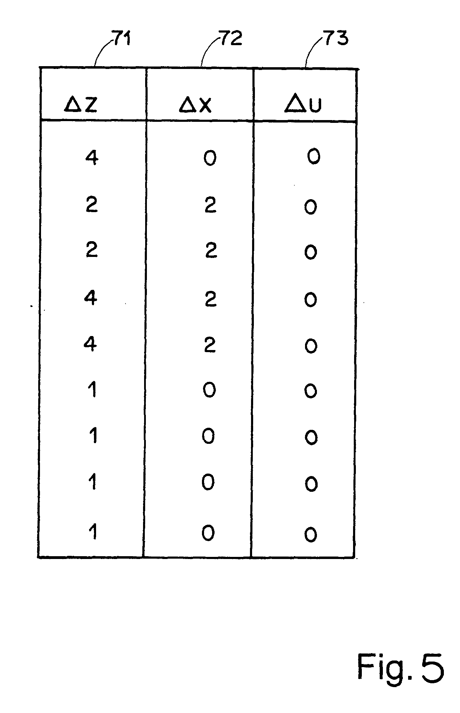

Les tables de pas correspondant à cet exemple sont illustrées sur la figure 5. Chaque colonne Δz, Δx, Δu représente le déplacement de l'axe correspondant après un intervalle Δt. Un compteur non représenté synchronise la lecture des tables de pas Δz, Δx, Δu à des intervalles Δt, les valeurs successives lues étant utilisées pour commander les moteurs 9, 11, 11' des axes correspondants. Ces tables permettent ainsi de programmer le dispositif de commande 13 de façon à usiner une pièce ayant le profil P sur la barre 5.

Dans une variante, les déplacements dans les tables de pas ne sont pas lus séquentiellement selon un ordre déterminé par un compteur, mais peuvent être accédés aléatoirement au moyen d'un registre d'adresse de lecture. L'adresse de lecture dans ce registre est incrémentée à chaque lecture de déplacement dans la table, mais peut aussi effectuer des sauts en fonction de l'état logique de la commande numérique.

Si la création manuelle ou même automatisée des tables de pas à partir du profil souhaité P est déjà fastidieuse dans un cas simple comme celui illustré, elle devient en pratique impossible pour commander des opérations complexes simultanées faisant chacune intervenir des mouvements interpolés et synchronisés entre plusieurs ressources. Il est donc nécessaire d'automatiser ce processus.

La figure 6 illustre à titre d'exemple un organigramme d'un logiciel de création des tables de pas selon l'invention.

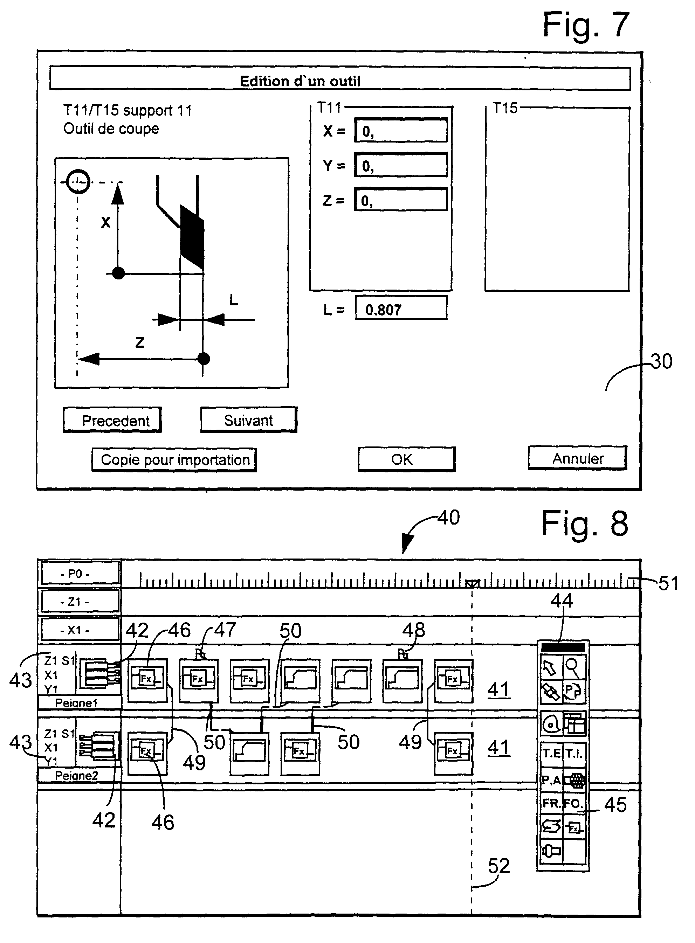

Lors d'une première étape 20, l'opérateur définit au moyen du logiciel un catalogue d'outils. Il énumère dans ce catalogue tous les outils montés sur la machine-outil utilisée. Le logiciel affiche dans ce but une boîte de dialogue 30 telle que celle représentée sur la figure 7 pour éditer chaque outil. L'opérateur a la possibilité d'ajouter, de supprimer ou d'éditer des outils dans son catalogue d'outil. La figure 7 illustre une boîte de dialogue permettant d'éditer un outil de coupe T15 nouvellement ajouté, c'est-à-dire de définir sa forme et sa position initiale. Les paramètres éditables dans la boîte de dialogue proposée dépendent de la nature de l'outil choisi, par exemple selon s'il s'agit d'un outil de coupe, de fraisage ou de perçage.

Lors d'une deuxième étape 21, l'opérateur définit au moyen d'une autre boîte de dialogue non représentée certains paramètres initiaux de la pièce à usiner. Ce paramétrage consiste à indiquer par exemple le diamètre et la longueur de la pièce initiale. De préférence, il est également possible d'entrer des données de type administratif permettant de retrouver la pièce, par exemple son numéro, le numéro d'identification des dessins correspondant à la pièce ou le nom de l'opérateur.

Lors d'une troisième étape 22, l'opérateur définit tout d'abord au moyen d'un menu ou d'une fenêtre de dialogue non représentée un ou plusieurs systèmes d'axes. En effet, selon une caractéristique importante de l'invention, les différentes ressources de la machine ne sont pas regroupées conceptuellement en canaux prédéterminés, mais peuvent être regroupées en systèmes d'axes librement définissables. Une ressource peut appartenir à plusieurs systèmes d'axes différents. Un système d'axes peut correspondre à une réalité physique, par exemple correspondre au plan de travail pour un outil particulier, mais peut également représenter un espace virtuel. On peut ainsi définir si nécessaire des systèmes d'axes non orthogonaux, obtenus par combinaisons linéaires de ressources physiques. Il est aussi possible de définir des systèmes d'axes en mouvement, par exemple un système d'axes en rotation lié à la pièce à usiner. Cette possibilité permet de simplifier ultérieurement la description d'opérations sur cette pièce, par exemple de définir la vitesse de perçage dans un référentiel en rotation lié à la pièce usinée elle même.

De préférence, le logiciel propose initialement des systèmes d'axes par défaut correspondant par exemple aux canaux habituels sur les machines à commande numériques CNC. Des options de menu non représentées permettent toutefois à l'opérateur de modifier ces systèmes d'axes par défaut ou d'ajouter de nouveaux systèmes d'axes. Des assistants informatiques sont de préférence utilisés pour définir des systèmes d'axes peu standards.

Ensuite, au cours de la même étape 22, l'opérateur définit le plan d'opérations pour chaque système d'axes. Le plan d'opérations pour chaque système d'axes est défini de préférence au moyen d'une fenêtre 40 illustrée sur la figure 8.

A chaque système d'axes défini correspond une ligne d'opérations 41 dans la fenêtre. Dans l'exemple illustré, il y a deux lignes d'opérations indiquées Peigne 1 et Peigne 2. Un symbole graphique 42 à gauche de chaque ligne d'opérations indique la nature du système d'axes. Dans l'exemple les systèmes d'axes correspondent aux axes de travail de deux chariots portant plusieurs outils de coupe. La liste des ressources 43 correspondant à chaque système d'axes est également indiquée à gauche. Le système d'axes correspondant au Peigne 1 utilise donc les ressources Z1, X1, Y1 et S1 tandis que le système d'axes correspondant au Peigne 2 utilise les ressources Z1, X2 et S1.

Une barre d'outil flottante 44 est affichée à droite de la fenêtre 40. En cliquant avec la souris sur une touche 45, correspondant à une opération d'usinage, dans la barre d'outil, l'opérateur sélectionne cette opération. Les opérations sélectionnables dans cet exemple sont le tournage externe (TE), le tournage interne (TI), le perçage/alésage (P,A), le filetage (FI), le fraisage (FR), le formage (FO), le polygonage (PO) et les opérations auxiliaires (AO). En cliquant à nouveau dans une des lignes d'opérations 41, l'opérateur y insère un symbole graphique 46 représentant l'opération sélectionnée. Si le système d'axes de la ligne d'opérations sélectionnée ne peut pas effectuer l'opération choisie, un signal d'erreur sonore est émis par le logiciel et le symbole graphique 46 ne se dépose pas dans la ligne. En plaçant plusieurs symboles 46 à côté les uns des autres sur une ligne, l'opérateur choisit très facilement pour chaque système d'axes la succession d'opérations à effectuer et les place dans un ordre chronologique sans se soucier à ce moment de problèmes de durée ou de synchronisation. Il est possible de modifier très simplement l'ordre des opérations, en cliquant sur un symbole graphique 46 et en relâchant la souris sur une nouvelle position.

Pour réaliser une série de pièces identiques sur une machine-outil, il est fréquent d'effectuer tout d'abord une séquence d'initialisation, puis de répéter dans une boucle une séquence d'usinage effectuée pour chaque pièce et après la dernière pièce d'effectuer encore une séquence de fin. L'opérateur peut définir très aisément le début et la fin d'une boucle d'opérations en plaçant avec la souris au-dessus des symboles graphiques 46 correspondant au début et à la fin de la boucle des fanions 47, 48 indiquant graphiquement le début et la fin de la boucle.

Lorsque l'opérateur a terminé la définition de son plan d'opérations dans les systèmes d'axes choisis, il impose au cours de l'étape 23 la manière dont les opérations sur les différents systèmes d'outils doivent être synchronisées. Les synchronisations peuvent être de type rigide ou extensible. Les synchronisations rigides sont des conditions strictes de synchronisme exact, par exemple:
"l'opération i doit se terminer en même temps que l'opération j". Au contraire, les synchronisations extensibles imposent des conditions moins strictes du type avant/après, par exemple:
"l'opération i doit se terminer avant le début de l'opération j". Ou bien:
"l'opération i doit se terminer 10 millisecondes après le début de l'opération j".

Il est possible de synchroniser soit le début, soit la fin des opérations, avec des événements tels que le début ou la fin d'une autre opération. Des options de menu appropriées permettent à l'opérateur de décaler le début et la fin d'une opération; par exemple, il peut décaler la fin d'une opération, sur laquelle se baseront les synchronisations des autres opérations, de 15 millisecondes par rapport à la fin effective de l'opération. L'opérateur peut aussi poser des bornes de synchronisation à l'intérieur d'une opération. Par exemple, il peut décomposer la durée d'une opération en 10 intervalles marqués par des bornes et synchroniser d'autres opérations par rapport à ces bornes. En outre, les opérations peuvent être synchronisées sur des signaux externes provenant par exemple de capteurs installés sur la machine ou sur des signaux d'horloge.

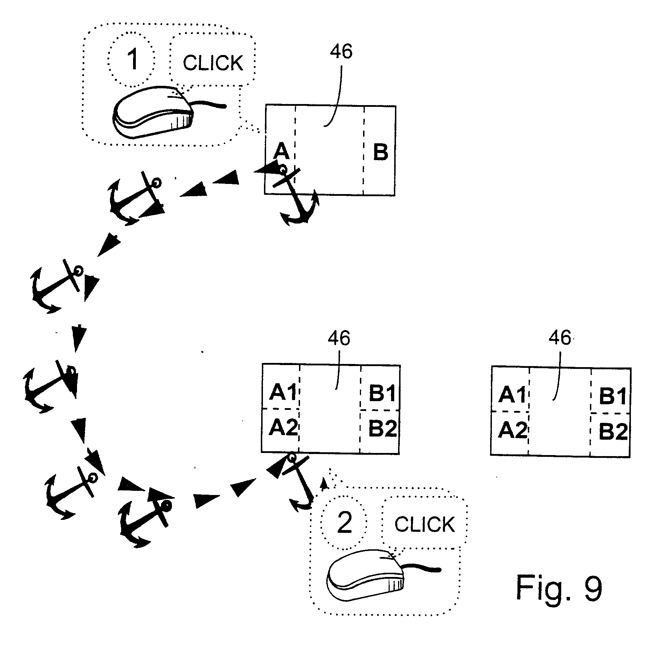

La figure 9 illustre le principe de placement des synchronisations rigides ou extensibles. L'opérateur sélectionne tout d'abord l'opération source devant être synchronisée. En cliquant dans la zone A à gauche du symbole graphique 46 correspondant à l'opération devant être synchronisée, il impose une condition sur le début de l'opération source; au contraire, en cliquant dans la zone B à droite du symbole graphique 46 correspondant à l'opération devant être synchronisée, il impose une condition sur la fin de l'opération source. Le curseur de la souris se transforme de préférence en un symbole différent selon la zone du symbole 46 sur laquelle l'utilisateur a cliqué.

L'opérateur peut alors déplacer le curseur sur le symbole graphique 46 correspondant à l'opération destination. En cliquant dans la zone A1 en haut à gauche du symbole, il impose une synchronisation rigide de l'opération source sur le début de l'opération destination. En cliquant dans la zone B1 en haut à droite, il impose une synchronisation rigide sur la fin de l'opération destination. En cliquant dans la zone A2 en bas à gauche, il impose une synchronisation extensible sur le début de l'opération destination. En cliquant dans la zone B1 en bas à droite, il impose une synchronisation extensible sur la fin de l'opération destination. De préférence, un message d'aide s'affiche en bas de l'écran ou à proximité du curseur lorsque le curseur survole une des zones sensibles A1 à B2. La forme du curseur peut aussi être adaptée en conséquence.

D'autres manières de définir les synchronisations peuvent naturellement être prévues, par exemple en indiquant dans une boîte de dialogue l'opération source, l'opération destination ainsi que les conditions de synchronisation entre ces opérations.

Après avoir défini chaque synchronisation, celle-ci est indiquée visuellement, de préférence par une ligne forte 49 (figure 8) pour les synchronisations rigides et par une ligne 50 moins marquée ou d'une autre couleur pour les synchronisations extensibles. Dans l'exemple, un symbole triangulaire est en outre placé sur la ligne indiquant les synchronisations extensibles. Lorsque des synchronisations sont placées, les symboles graphiques 46 sur les différentes lignes 41 se déplacent de façon à indiquer au mieux la chronologie des opérations. En cliquant sur une ligne de synchronisation 49 ou 50, l'opérateur appele une fenêtre de dialogue non représentée qui lui permet de définir des synchronisations plus complexes.

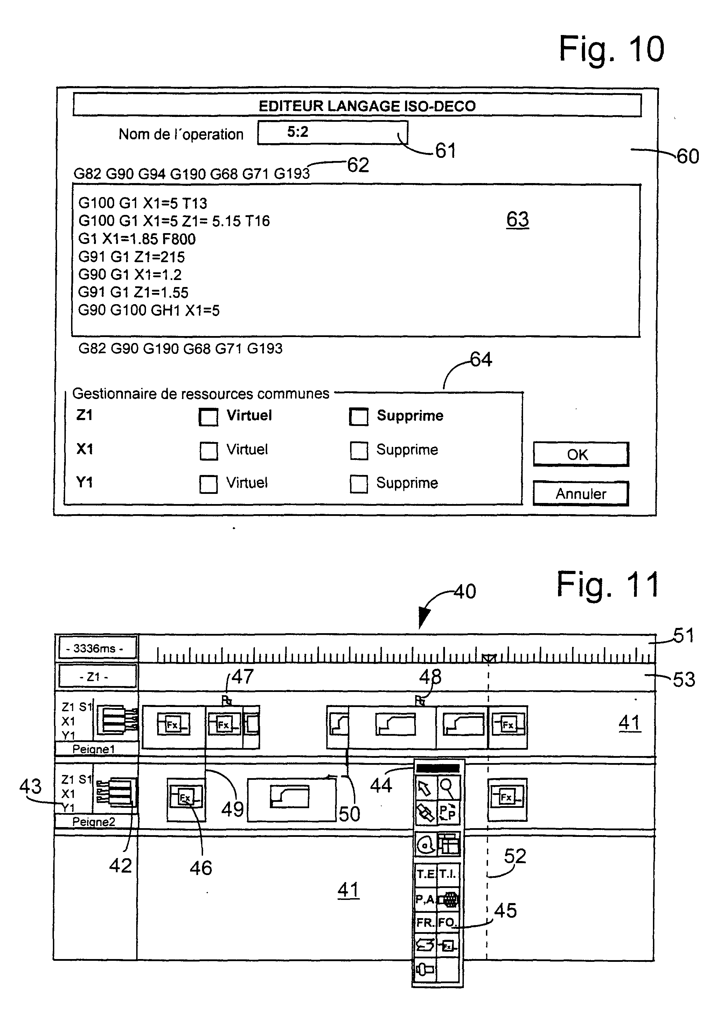

Le plan d'opérations défini dans les différents systèmes d'axes au cours de la troisième étape 22 ainsi que les règles de synchronisations définies au cours de la quatrième étape 23 définissent ensemble la gamme opératoire pour la pièce usinée. Au cours de la cinquième étape 24, l'opérateur peut paramétrer les opérations dont il a défini précédemment la chronologie. Cette étape permet d'indiquer exactement en quoi consistent les opérations choisies; par exemple, s'il a placé un symbole graphique 46 correspondant à une opération de fraisage, il peut au cours de l'étape 24 définir la profondeur de fraisage et l'endroit précis où le fraisage doit être effectué. Dans ce but, en cliquant deux fois rapidement sur le symbole graphique 46 de l'opération à paramétrer, l'opérateur voit s'afficher une fenêtre de dialogue 60 représentée sur la figure 10.

Dans le premier champ 61 de la fenêtre 60, l'opérateur peut indiquer le nom qu'il souhaite donner à l'opération. Ce nom peut dans une variante être affiché dans la partie inférieure des symboles graphiques 46. Par défaut, le logiciel propose un nom composé de deux nombres séparés par un ":". Le premier nombre (5) identifie la ligne d'opérations tandis que le deuxième nombre (2) identifie l'opération.

Dans une variante, un commentaire peut être introduit par l'utilisateur dans un masque approprié. Ce commentaire peut s'afficher par exemple dans la barre de statut sous la fenêtre lorsque le curseur de la souris survole le symbole graphique 46 correspondant à l'opération.

La deuxième ligne 62 de la fenêtre de dialogue 60 est une suite d'instructions non éditables en langage ISO. Ces instructions sont des instructions préliminaires dépendant de la nature de l'opération d'usinage.

Sous la deuxième ligne 62 se trouve une zone de texte éditable 63 dans laquelle l'opérateur peut introduire une suite d'instructions en langage ISO lui permettant de paramétrer et de définir l'opération à effectuer. De préférence, une suite d'instructions est proposée par défaut lorsque l'opérateur ouvre la fenêtre de dialogue. Des commentaires peuvent être ajoutés entre les instructions pour permettre même à l'utilisateur peu familier avec ce langage de paramétrer facilement toutes les opérations.

Sous la zone d'édition 63 est affichée une seconde suite 64 d'instructions non éditables en langage ISO. Ces instructions sont des instructions terminales dépendant de la nature de l'opération. Dans une variante, il n'y a pas d'instructions terminales.

Nous avons vu qu'une même ressource, par exemple un même axe, peut appartenir à plusieurs systèmes d'axes différents. Par exemple, sur la figure 8, l'axe Z1 appartient aussi bien au système d'axe du peigne 1 qu'au système d'axes du peigne 2. Suivant la gamme opératoire correspondant à ces deux systèmes d'axes, l'axe Z1 dans cet exemple pourrait être amené à devoir effectuer simultanément des déplacements dans des directions différentes; il est donc nécessaire de régler ces conflits potentiels. Pour cela, une zone 64 est affichée dans la fenêtre 60, qui permet de définir comment ces conflits éventuels doivent être réglés.

L'opérateur a la possibilité de supprimer une ressource commune, c'est-à-dire de la rendre non disponible pour le système d'axes considéré. Il peut aussi rendre une ressource virtuelle.

Dans ce dernier cas, si les deux opérations sur deux systèmes d'axes différents en conflit pour une ressource sont identiques et synchronisées de manière à démarrer simultanément, les déplacements de la ressource commune ne dépendent que de l'opération maîtresse, c'est-à-dire non virtuelle. L'opération virtuelle effectue une copie de l'opération maîtresse. Par exemple, dans le cas de la machine-outil décrite par la figure 1, des opérations utilisant l'outil 7 peuvent entrer en conflit pour le partage de l'axe z avec des opérations utilisant l'outil 7'. Si les opérations sont identiques et que la ressource z est déclarée virtuelle dans le système d'axes correspondant à l'outil 7', l'outil 7' effectuera simplement une copie miroir des déplacements de l'outil 7.

Si les deux opérations en conflit sont différentes, mais synchronisées de manière à démarrer et à se terminer simultanément, le logiciel calcule les déplacements de la ressource commune en tenant uniquement compte de l'opération maîtresse. Les déplacements des autres ressources de l'opération virtuelle sont adaptés en fonction des déplacements ainsi imposés de la ressource commune. Dans l'exemple ci-dessus, si les opérations des outils 7 et 7' ne sont pas identiques, et que la ressource z est déclarée virtuelle pour le système d'axes correspondant à l'outil 7', le logiciel calculera la table de pas commandant l'axe z en fonction uniquement de l'opération sur l'outil z, et adaptera la table de pas commandant l'axe u portant l'outil 7' en fonction des mouvements prédéfinis de l'axe z.

Dans une variante préférentielle, des opérateurs connus dans les systèmes d'exploitation graphiques sous le nom "assistants" permettent à l'opérateur peu expert de paramétrer les opérations d'usinage sans même connaître le langage ISO. Ces assistants sont des modules de programme affichant une succession de boites de dialogue, dépendant de l'opération choisie, permettant à l'opérateur en répondant à des questions simples successives de paramétrer complètement l'opération. A chaque boîte de dialogue successive est associée une fenêtre d'aide expliquant exactement à l'opérateur les conséquences de ces choix. Ce type d'assistant est notamment connu en informatique dans les programmes d'installation de logiciels, et il n'est pas nécessaire de les décrire plus en détail. De préférence, les deux possibilités de paramétrage mentionnées sont combinées au cours de l'étape 24; l'utilisation de l'assistant génère automatiquement du code ISO qui est ensuite éditable.

Il est à noter que les étapes 22, 23 et 24 sur la figure 4 ne doivent pas être exécutées à la suite les unes des autres, mais le sont généralement selon un processus itératif, l'opérateur pouvant par exemple commencer à paramétrer ou synchroniser des opérations avant de les avoir toutes introduites.

Après avoir terminé de définir la gamme opératoire et avoir paramétré chaque opération, l'opérateur lance au cours de la sixième étape 25 l'interprétation du programme de pièce ainsi crée. Il peut effectuer cette opération en cliquant sur une option de menu appropriée dans la fenêtre de la figure 8. Durant cette étape d'interprétation, le logiciel détecte certaines fautes ou contradictions possibles dans la gamme opératoire, par exemple des conflits non résolus de ressources communes, des déplacements de ressource hors des limites de la machine ou des mouvements faisant intervenir des outils non installés ou des collisions d'outil. Le module d'interprétation détermine en outre au cours de cette étape 25 les séquences de déplacement des différentes ressources, définissant les positions de chaque ressource au début et au terme de chaque déplacement.

L'interpréteur calcule les séquences au moyen d'une table faisant correspondre à chaque instruction en langage ISO des portions de séquence prédéterminées.

Le logiciel vérifie au cours de l'étape 26 le résultat fourni par l'interpréteur. En cas d'erreurs détectées, un message s'affiche sur l'écran et l'opérateur a ensuite la possibilité de modifier et de corriger la gamme opératoire. Si tout s'est passé correctement, l'opérateur peut lancer au cours de l'étape suivante 27 un calculateur qui calcule et affiche les trajectoires des outils ou des ressources au cours des séquences déterminées au cours de l'interprétation. Ces trajectoires sont directement utilisées pour la génération des tables de pas permettant de commander les moteurs des différents axes et broches.

Le fonctionnement du calculateur est connu dans l'art antérieur. Comme il relève des mathématiques et de la programmation pure, il n'est pas décrit ici.

La figure 11 illustre l'aspect de la fenêtre principale 40 affichée après l'étape 27 de calcul. La largeur des symboles graphiques 46 est modifiée de manière à correspondre à leur durée calculée, conformément à l'échelle des temps 51 affichée au-dessus des lignes de ressource. Un curseur 52 peut être déplacé au moyen de la souris pour mesurer de manière précise certains instants, le temps (3336 ms) s'affichant dans un rectangle tout en haut à gauche de la fenêtre. Dans la zone 52, un diagramme illustre la trajectoire de la ressource Z1 correspondante, c'est-à-dire la position de cet axe en fonction du temps. L'opérateur a naturellement la possibilité de choisir les ressources dont il souhaite contrôler la trajectoire. Il peut ainsi s'assurer que les déplacements des différents outils correspondent exactement à ce qui est désiré, et notamment que les outils occupent bien la même position au début et à la fin d'une boucle de répétition indiquée par les fanions 47 et 48.

Cette fenêtre permet ainsi à l'opérateur de contrôler très simplement, de manière visuel!e, le déroulement des opérations successives d'usinage. En particulier, il est possible de se rendre compte aisément des possibilités d'accélérer le processus d'usinage en ajustant ou déplaçant les opérations les plus critiques. Si l'opérateur n'est pas satisfait par le résultat, il peut encore à cet instant revenir en arrière et modifier itérativement la gamme opératoire définie.

Selon les variantes, les tables de pas sont soit générées directement par le calculateur, soit obtenues d'après les données du calculateur au cours d'une étape 29 de création des tables. Ces tables sont ensuite transposées au moyen d'un support magnétique ou optique ou d'une ligne sérielle 15 sur la commande numérique 13 de la machine-outil (figure 1).

Le logiciel de l'invention permet donc de générer des tables de pas à partir du programme de pièce crée au cours des étapes 20 à 24. Il est cependant bien clair qu'il est possible de créer plusieurs programmes de pièces et d'enchaîner au cours de l'exécution la lecture des tables de pas générées par ces différents programmes. L'enchaînement des différentes tables de pas peut aussi dépendre de conditions externes Un événement tel que le remplacement d'un outil, la rupture d'une mèche ou la fin d'une série de pièces par exemple peut provoquer l'exécution d'une nouvelle table de pas.

## Revendications

1. Procédé de génération d'ordres de déplacements pour une machine-outil dont les ressources (7, 7') constituées par les axes et/ou broches de la machine-outil sont regroupées en plusieurs systèmes d'axes, **caractérisé en ce que** le procédé comprend:
une étape (22) permettant à l'opérateur d'introduire dans chaque système d'axes un plan d'opérations constitué par une succession d'opérations consécutives, chaque opération étant choisie parmi un catalogue d'opérations,
une étape (23) permettant à l'opérateur d'imposer des règles de synchronisation entre opérations effectuées dans des systèmes d'axes différents,
et une étape (25, 27, 29) de calcul des ordres de déplacement à partir de la gamme opératoire que constitue l'ensemble du plan d'opérations et des règles de synchronisation.

2. Procédé selon la revendication 1, **caractérisé en ce que** lesdits ordres de déplacement sont implémentés sous forme de tables de pas (71, 72, 73).

3. Procédé selon l'une des revendications précédentes, **caractérisé en ce que** les ressources que constituent les axes et/ou broches de la machine-outil peuvent être librement regroupées en systèmes d'axes définissables par l'opérateur.

4. Procédé selon l'une des revendications précédentes, **caractérisé en ce que** l'opérateur peut choisir parmi plusieurs types de règles de synchronisation entre opérations.

5. Procédé selon la revendication précédente, **caractérisé en ce que** l'une des règles de synchronisation possible consiste à définir qu'une opération doit commencer ou se terminer au moment précis où une autre opération sur un autre système d'axes commence ou se termine.

6. Procédé selon la revendication 4, **caractérisé en ce que** l'une des règles de synchronisation possible consiste à définir qu'une opération doit commencer au plus tôt ou se terminer au plus tard à l'instant où une autre opération sur un autre système d'axes commence ou se termine.

7. Procédé selon la revendication 4, **caractérisé en ce que** l'une des règles de synchronisation possible consiste à définir le début ou la fin d'une opération par un délai à partir d'une autre opération.

8. Procédé selon la revendication 4, **caractérisé en ce que** l'une des règles de synchronisation possible consiste à définir le début ou la fin d'une opération par un événement externe fourni par un capteur sur la machine-outil.

9. Procédé selon l'une des revendications précédentes, **caractérisé en ce qu'**il comprend en outre une étape de paramétrage (24) des différentes opérations, permettant à l'opérateur de paramétrer les différentes opérations.

10. Procédé selon la revendication 9, **caractérisé en ce que** ladite étape de paramétrage (24) permet à l'opérateur de paramétrer chaque opération au moyen du langage ISO.

11. Procédé selon la revendication 9 ou 10, **caractérisé en ce que** ladite étape de paramétrage (24) permet à l'opérateur de paramétrer chaque opération au moyen d'assistants informatiques.

12. Procédé selon l'une des revendications précédentes, **caractérisé en ce qu'**il comprend en outre une étape préliminaire (21) permettant à l'opérateur de définir certaines caractéristiques de la pièce à usiner.

13. Procédé selon l'une des revendications précédentes, **caractérisé en ce qu'**il comprend en outre une étape préliminaire (20) de création d'un catalogue d'outils permettant à l'opérateur de définir les outils (7, 7') montés sur la machine-outil.

14. Procédé selon l'une des revendications précédentes, **caractérisé en ce que** ladite étape (25, 27, 29) de calcul des ordres de déplacement comprend une première étape (25) d'interprétation de la gamme opératoire au terme de laquelle l'opérateur est averti s'il a introduit des données erronées ou incompatibles entre elles ou avec la machine-outil utilisée.

15. Procédé selon la revendication précédente, **caractérisé en ce qu'**un test des collisions éventuelles entre outils est effectué au cours de ladite étape d'interprétation (25).

16. Procédé selon l'une des revendications précédentes, **caractérisé en ce qu'**une ressource constituée par des axes et/ou broches de la machine-outil peut être déclarée virtuelle dans un système d'axe lorsque cette ressource est simultanément utilisée dans un autre système d'axe.

17. Procédé selon l'une des revendications précédentes, **caractérisé en ce que** l'introduction par l'opérateur d'un plan d'opérations constitué par une succession d'opérations consécutives se fait en déplaçant des symboles graphiques (46) sur une interface utilisateur graphique (40).

18. Procédé selon la revendication précédente, **caractérisé en ce que** les règles de synchronisation entre opérations sont introduites en alignant lesdits symboles graphiques (46), ou en les reliant par des éléments graphiques (49, 50).

19. Procédé selon l'une des revendications 17 ou 18, **caractérisé en ce qu'**au terme de ladite étape (25, 27, 29) de calcul des ordres de déplacement la largeur desdits symboles graphiques (46) est adaptée de manière à correspondre à la durée des opérations correspondantes.

20. Logiciel pour la mise en oeuvre du procédé selon l'une quelconque des revendications 1 à 19, ce logiciel comprenant des codes d'instructions propres à être lus ou stockés sur un support, lesdits codes étant exécutables par un ordinateur destiné à générer des ordres de déplacement pour une machine-outil dont les ressources, constituées par les axes et/ou broches qu'elle comprend, sont regroupées en plusieurs systèmes d'axes, ce logiciel étant **caractérisé en ce qu'**il comprend :
- une étape de réception, dans chaque système d'axes, d'un plan d'opération constitué par une succession d'opérations consécutives, chaque opération étant choisie dans un catalogue d'opérations,
- une étape de réception de règles de synchronisation entre opérations effectuées dans différents axes,
- une étape de calcul d'ordres de déplacement à partir de la gamme opératoire que constitue l'ensemble du plan d'opérations et des règles de synchronisation.

21. Support magnétique ou optique sur lequel est enregistré un logiciel comprenant les étapes selon la revendication 20 et comprenant des codes d'instructions propres à être lus ou stockés sur un support, lesdits codes étant exécutables par un ordinateur destiné à générer des ordres de déplacement pour une machine-outil dont les ressources sont regroupées en plusieurs systèmes d'axes.

22. Dispositif de commande numérique (13) pour machine-outil comprenant un écran d'affichage d'informations ainsi que des ressources, tels des moteurs et différents systèmes d'axes et broches, fonctionnant sous l'influence d'une table de pas, ledit dispositif étant destiné à fonctionner avec le logiciel selon la revendication 20 et étant **caractérisé en ce qu'**il met en oeuvre au moins :
- une fenêtre de dialogue (40, 60) avec un opérateur et permettant l'affichage et la sélection de symboles, notamment graphiques (41 à 51), représentant,
. des opérations d'un catalogue d'opérations et d'au moins un système d'axes,
. des règles de synchronisation entre des opérations effectuées dans des systèmes d'axes différents,
- un module d'interprétation pour interpréter la gamme opératoire que constitue l'ensemble du plan d'opérations et des règles de synchronisation et calculer des séquences au moyen d'une table faisant correspondre à chaque instruction, des portions de séquences déterminées,
- un calculateur qui,
. calcule et affiche les trajectoires des outils ou des ressources au cours des séquences déterminées au cours de l'interprétation d'ordres de déplacement, à partir de ladite gamme opératoire,
. génère les tables de pas permettant de commander les moteurs et les différents axes et broches.

## Claims

1. Process of generating displacement commands for a machine tool whose facilities (7, 7'), constituted by the axes and/or spindles of the machine tool, are regrouped in a plurality of systems of axes, **characterised in that** the process comprises:
a stage (22) allowing the operator to introduce in each system of axes a plan of operations constituted by a succession of consecutive operations, each operation being chosen from among a catalogue of operations,
a stage (23) allowing the operator to impose rules of synchronisation between operations carried out in different systems of axes,
and a stage (25, 27, 29) of computation of displacement commands starting from the operating sequence which constitutes the set of the plan of operations and rules of synchronisation.

2. Process according to claim 1, **characterised in that** the said displacement commands are implemented in the form of tables of steps (71, 72, 73).

3. Process according to one of the preceding claims, **characterised in that** the facilities which constitute the axes and/or spindles of the machine tool can be freely regrouped in systems of axes definable by the operator.

4. Process according to one of the preceding claims, **characterised in that** the operator can choose from among a plurality of types of rules of synchronisation between operations.

5. Process according to the preceding claim, **characterised in that** one of the possible rules of synchronisation consists in defining that an operation must commence or be terminated at the precise moment when another operation on another system of axes commences or is terminated.

6. Process according to claim 4, **characterised in that** one of the possible rules of synchronisation consists in defining that an operation must commence at the earliest or be terminated at the latest at the instant when another operation on another system of axes commences or is terminated.

7. Process according to claim 4, **characterised in that** one of the possible rules of synchronisation consists in defining the start or the end of an operation by a delay in starting of another operation.

8. Process according to claim 4, **characterised in that** one of the possible rules of synchronisation consists in defining the start or the end of an operation by an external occurrence supplied by a sensor on the machine tool.

9. Process according to one of the preceding claims, **characterised in that** it further comprises a stage of parameterization (24) of different operations, allowing the operator to parameterize the different operations.

10. Process according to claim 9, **characterised in that** the said stage of parameterization (24) allows the operator to parameterize each operation by means of ISO language.

11. Process according to claim 9 or 10, **characterised in that** the said stage of parameterization (24) allows the operator to parameterize each operation by means of digital assistants.

12. Process according to one of the preceding claims, **characterised in that** it further comprises a preliminary stage (21) allowing the operator to define certain characteristics of the piece to be machined.

13. Process according to one of the preceding claims, **characterised in that** it further comprises a preliminary stage (20) of creation of a catalogue of tools allowing the operator to define the tools (7, 7') mounted on the machine tool.

14. Process according to one of the preceding claims, **characterised in that** the said stage (25, 27, 29) of computation of displacement commands comprises a first stage (25) of interpretation of the operating sequence at the end of which the operator is notified if he has introduced erroneous data or data incompatible within itself or with the machine tool used.

15. Process according to the preceding claim, **characterised in that** a test of possible conflicts between tools is carried out during the said interpretation stage (25).

16. Process according to one of the preceding claims, **characterised in that** a facility constituted by axes and/or spindles of the machine tool can be declared virtually in an axis system when this facility is simultaneously used in another axis system.

17. Process according to one of the preceding claims, **characterised in that** the introduction by the operator of a plan of operations constituted by a succession of consecutive operations is carried out by displacing graphic symbols (46) on a graphic user interface (40).

18. Process according to the preceding claim, **characterised in that** the rules of synchronisation between operations are introduced by aligning the said graphic symbols (46) or by connecting them through graphic elements (49, 50).

19. Process according to one of the claims 17 or 18, **characterised in that** at the end of the said stage (25, 27, 29) of computation of displacement commands the width of the said graphic symbols (46) is adapted in such a way as to correspond to the duration of corresponding operations.

20. Software for implementing the method according to any one of the claims 1 to 19, this software comprising codes of instructions suitable for being read or stored on a medium, the said codes being executable by a computer intended to generate displacement commands for a machine tool whose facilities, constituted by the axes and/or spindles it comprises, are regrouped into a plurality of systems of axes, this software being **characterised in that** it comprises:
- a stage of receiving, in each system of axes, of a plan for operation constituted by a succession of consecutive operations, each operation being chosen in a catalogue of operations,
- a stage of receiving rules of synchronisation between operations carried out on different axes,
- a stage of computation of displacement commands starting from the operating sequence that constitutes the set of the plan of operations and of rules of synchronisation.

21. Magnetic or optical medium on which is registered a software comprising the stages according to claim 20 and comprising codes of instructions suitable for being read or stored on a medium, the said codes being executable by a computer intended to generate displacement commands for a machine tool whose facilities are regrouped in a plurality of systems of axes.

22. Numerical control device (13) for a machine tool comprising a screen for display of information as well as of facilities, such as motors and different systems of axes and spindles, functioning under the influence of a table of steps, the said device being intended to operate with the software according to claim 20 and being **characterised in that** it implements at least:
- one dialogue window (40, 60) with an operator and allowing display and selection of symbols, in particular diagrams (41 to 51) representing
• operations from a catalogue of operations and at least one system of axes,
• rules of synchronisation between operations carried out in the different systems of axes,
- an interpretation module for interpreting the operating sequence which constitutes the set of the plan of operations and rules of synchronisation and for calculating sequences by means of a table making portions of predetermined sequences correspond to each instruction,
- a computer which
• calculates and displays the trajectories of the tools or of the facilities during the predetermined sequences during the interpretation of displacement commands, starting from the said operating sequence,
• generates the tables of steps allowing the motors and the different axes and spindles to be controlled.

## Patentansprüche

1. Verfahren zur Erzeugung von Verschiebungsbefehlen für eine Werkzeugmaschine, deren durch Achsen und/oder Spindeln der Werkzeugmaschine gebildete Ressourcen (7, 7') in mehrere Achsensysteme gruppiert sind, **dadurch gekennzeichnet, dass** das Verfahren enthält:
einen Abschnitt (22), der dem Operateur erlaubt, in jedes Achsensystem einen Operationsplan einzuführen, der durch eine Abfolge von aufeinander folgenden Operationen gebildet ist, wobei jede Operation aus einem Operationenkatalog ausgewählt wird,
einen Abschnitt (23), der dem Operateur erlaubt, Synchronisationsregeln zwischen in verschiedenen Achsensystemen ausgeführten Operationen durchzuführen,
und einen Abschnitt (25, 27, 29) zum Berechnen von Verschiebungsbefehlen aus der Operationsreihe, welche die Gesamtheit des Operationsplans und der Synchronisationsregeln bildet.

2. Verfahren nach Anspruch 1, **dadurch gekennzeichnet, dass** die genannten Verschiebungsbefehle in der Form von Schrittetabellen (71, 72, 73) ausgeführt werden.

3. Verfahren nach einem der vorangehenden Ansprüche, **dadurch gekennzeichnet, dass** die Ressourcen, welche die Achsen und/oder Spindeln der Werkzeugmaschine bilden, frei in durch den Operateur definierbare Achsensysteme umgruppiert werden können.

4. Verfahren nach einem der vorangehenden Ansprüche, **dadurch gekennzeichnet, dass** der Operateur unter mehreren Typen von Synchronisationsregeln zwischen den Operationen wählen kann.

5. Verfahren nach dem vorangehenden Anspruch, **dadurch gekennzeichnet, dass** eine der möglichen Synchronisationsregeln darin besteht, zu definieren, dass nur eine Operation beginnen oder enden soll, genau im Moment, in dem eine andere Operation auf einem anderen Achsensystem beginnt oder endet.

6. Verfahren nach Anspruch 4, **dadurch gekennzeichnet, dass** eine der möglichen Synchronisationsregeln darin besteht, zu definieren, dass eine Operation frühestens beginnen oder spätestens enden soll, im Moment, in dem eine andere Operation auf einem anderen Achsensystem beginnt oder endet.

7. Verfahren nach Anspruch 4, **dadurch gekennzeichnet, dass** eine der möglichen Synchronisationsregeln darin besteht, den Beginn oder das Ende einer Operation durch eine Verzögerung ab einer anderen Operation zu definieren.

8. Verfahren nach Anspruch 4, **dadurch gekennzeichnet, dass** eine der möglichen Synchronisationsregeln darin besteht, den Beginn oder das Ende einer Operation durch ein externes Ereignis zu definieren, das durch einen Aufnehmer auf der Werkzeugmaschine geliefert wird.

9. Verfahren nach einem der vorangehenden Ansprüche, **dadurch gekennzeichnet, dass** es ausserdem einen Parametrierungsabschnitt (24) der verschiedenen Operationen enthält, der dem Operateur erlaubt, die verschiedenen Operationen zu parametrieren.

10. Verfahren nach Anspruch 9, **dadurch gekennzeichnet, dass** der genannte Parametrierungsabschnitt (24) dem Operateur erlaubt, jede Operation mittels der Sprache ISO zu parametrieren.

11. Verfahren nach Anspruch 9 oder 10, **dadurch gekennzeichnet, dass** der genannte Parametrierungsabschnitt (24) dem Operateur erlaubt, jede Operation mittels softwarebasierter Assistenten zu parametrieren.

12. Verfahren nach einem der vorangehenden Ansprüche, **dadurch gekennzeichnet, dass** es ausserdem einen vorangehenden Abschnitt (21) enthält, der dem Operateur erlaubt, gewisse Eigenschaften des zu bearbeitenden Stückes zu definieren.

13. Verfahren nach einem der vorangehenden Ansprüche, **dadurch gekennzeichnet, dass** es ausserdem einen vorangehenden Abschnitt (20) zur Erzeugung eines Werkzeugkatalogs enthält, der dem Operateur erlaubt, die auf der Werkzeugmaschine montierten Werkzeuge (7, 7') zu definieren.

14. Verfahren nach einem der vorangehenden Ansprüche, **dadurch gekennzeichnet, dass** der genannte Abschnitt (25, 27, 29) zum Berechnen von Verschiebungsbefehlen einen ersten Abschnitt (25) zur Interpretation der Operationsfolge enthält, an dessen Ende der Operateur gewarnt wird, wenn er Daten eingegeben hat, die unrichtig oder unter sich oder mit der verwendeten Werkzeugmaschine inkompatibel sind.

15. Verfahren nach dem vorangehenden Anspruch, **dadurch gekennzeichnet, dass** im Lauf des genannten Abschnitts (25) zur Interpretation ein Test auf eventuelle Kollisionen zwischen den Werkzeugen durchgeführt wird.

16. Verfahren nach einem der vorangehenden Ansprüche, **dadurch gekennzeichnet, dass** eine durch Achsen und/oder Spindeln der Werkzeugmaschine gebildete Ressource virtuell in einem Achsensystem deklariert werden kann, während diese Ressource gleichzeitig in einem anderen Achsensystem verwendet wird.

17. Verfahren nach einem der vorangehenden Ansprüche, **dadurch gekennzeichnet, dass** die Einführung eines durch eine Abfolge von aufeinander folgenden Operationen gebildeten Operationsplans durch den Operateur durch Verschieben von graphischen Symbolen (46) auf einer graphischen Benutzeroberfläche (40) ausgeführt wird.

18. Verfahren nach dem vorangehenden Anspruch, **dadurch gekennzeichnet, dass** die Synchronisationsregeln zwischen Operationen eingeführt werden, indem die genannten graphischen Symbole (46) in eine Reihe gebracht oder durch graphische Elemente (49, 50) verbunden werden.

19. Verfahren nach einem der Ansprüche 17 oder 18, **dadurch gekennzeichnet, dass** im Lauf des genannten Abschnitts (25, 27, 29) zum Berechnen der Verschiebungsbefehle die Grösse der genannten graphischen Symbole (46) derart angepasst wird, dass sie der Dauer der entsprechenden Operationen entspricht.

20. Software zum Ausführen des Verfahrens nach einem der Ansprüche 1 bis 19, welche Software Instruktionscodes enthält, die geeignet sind, gelesen oder auf einem Träger gespeichert zu werden, wobei diese Codes durch einen Computer ausführbar sind, der dazu bestimmt ist, Verschiebungsbefehle für eine Werkzeugmaschine zu erzeugen, deren Ressourcen, die durch die Achsen und/oder Spindeln gebildet sind, die sie enthält, in mehrere Achsensysteme aufgeteilt sind, wobei diese Software **dadurch gekennzeichnet ist, dass** sie enthält:
- einen Empfangsabschnitt, in jedem Achsensystem, eines Operationsplans, gebildet durch eine Abfolge von aufeinander folgenden Operationen, wobei jede Operation in einem Operationenkatalog gewählt wird,
- einen Empfangsabschnitt von Synchronisationsregeln zwischen in verschiedenen Achsen ausgeführten Operationen,
- einen Berechnungsabschnitt von Verschiebungsbefehlen aus der Operationsfolge, welche die Gesamtheit des Operationsplans und der Synchronisationsregeln bildet.

21. Magnetischer oder optischer Träger, auf dem eine Software aufgezeichnet ist, welche die Abschnitte nach Anspruch 20 enthält und welche Instruktionscodes enthält, die geeignet sind, gelesen oder auf einem Träger gespeichert zu werden, wobei die genannten Codes durch einen Computer ausführbar sind, der dazu bestimmt ist, Verschiebungsbefehle für eine Werkzeugmaschine zu erzeugen, deren Ressourcen in mehrere Achsensysteme aufgeteilt sind.

22. Vorrichtung (13) zur numerischen Steuerung einer Werkzeugmaschine, enthaltend einen Schirm zur Anzeige von Informationen sowie Ressourcen wie Motoren und verschiedene Achsen- und Spindelsysteme, die unter dem Einfluss einer Schrittetabelle funktionieren, welche Vorrichtung dazu bestimmt ist, mit dem Programm nach Anspruch 20 zu funktionieren und **dadurch gekennzeichnet ist, dass** sie mindestens ausführt:
- ein Dialogfenster (40, 60) mit einem Operator, das die Anzeige und Auswahl von insbesondere graphischen Symbolen (41 bis 51) erlaubt, die darstellen
. Operationen eines Operationenkatalogs mindestens eines Achsensystems,
. Synchronisationsregeln zwischen den in verschiedenen Achsensystemen ausgeführten Operationen,
- ein Interpretationsmodul zum Interpretieren der Operationsfolge, welche die Gesamtheit des Operationsplans und der Synchronisationsregeln bildet und Berechnen von Sequenzen mittels einer Tabelle, die mit jeder Instruktion Teile von bestimmten Sequenzen zur Übereinstimmung bringt,
- einen Rechner, der
. die Bahnen der Werkzeuge oder der Ressourcen im Ablauf der bestimmten Sequenzen im Lauf der Interpretation der Verschiebungsbefehle aus der genannten Operationsfolge berechnet und anzeigt,
. Schrittetabellen erzeugt, die es erlauben, die Motoren und die verschiedenen Achsen und Spindeln zu steuern.
